# EUROPEAN PATENT APPLICATION

(11) **EP 4 614 842 A1**
(43) Date of publication of application: **10.09.2025**
(21) Application number: 24161306.6
(22) Date of filing: 05.03.2024
(51) Int. Cl.: H04B 17/309

(54) **RECEIVER, SYSTEM COMPRISING SUCH A RECEIVER, AND RECEIVING METHOD**

(71) Applicant: Rohde & Schwarz GmbH & Co. KG, 81671 München (DE)
(72) Inventor: Rowell, Corbett, Dr., 83104 Tuntenhausen (DE); Celik, Mert, 81673 Munich (DE); Mehlhorn, Benjamin, 83059 Kolbermoor (DE); Wirsing, Florian, 83059 Kolbermoor (DE)
(74) Representative: Rupp, Christian

(57) **Abstract**

A receiver (10) is provided. Said receiver (10) comprises at least one port (11) for directly or indirectly connecting at least one antenna (16), and a processing unit (12) connected to the at least one port (11). In this context, the processing unit (12) is configured to measure at least one noise parameter, especially over a certain frequency range, with respect to the at least one antenna (16). In addition to this, the processing unit (12) is configured to correlate the correspondingly measured at least one noise parameter to at least one antenna load characteristic for detecting the at least one antenna (16) and/or for determining the corresponding type of the at least one antenna (16).

## Description

The invention relates to a receiver, a system comprising such a receiver, and a receiving method. In particular, the invention relates to a receiver with antenna detection, especially automatic antenna detection, preferably for receiver optimization, a system comprising the latter and at least one antenna, and a corresponding receiving method.

Generally, in times of an increasing number of communication applications providing wireless connectivity capabilities, there is a growing need of a receiver, a system comprising such a receiver, and a receiving method, which allow for a cheap and fast antenna detection, especially automatic antenna detection, in order to make such applications more efficient, especially in the sense of an improved receiver.

Document US 2020/0313711 A1 relates to a system including a radio frequency (RF) connector terminal that is configured to connect to an antenna, and a RF transmitter that transmits RF power to the RF connector terminal. The system further includes a power measurement unit that measures, as a first power measurement, first RF power of the RF transmitter power that is reflected via the RF connector terminal, and a controller that causes a transmission path discontinuity between the RF transmitter and the RF connector terminal. The power measurement unit further measures, as a second power measurement, second RF power of the RF transmitter power that is reflected from the discontinuity. The controller further determines if a first antenna is connected to the RF connector terminal based on the first and second power measurements. Disadvantageously, such an antenna detection using antenna return loss requires not only said power measurement unit but also said RF transmitter, thereby making said antenna detection expensive and slow.

Accordingly, there is an object to provide a receiver, a system comprising such a receiver, and a receiving method, which allow for antenna detection, especially automatic antenna detection, thereby ensuring low cost and low time expenditure.

This object is solved by the features of the first independent claim for a receiver, the features of the second independent claim for a system comprising such a receiver, and the features of the third independent claim for a receiving method. The dependent claims contain further developments.

According to a first aspect of the invention, a receiver is provided. Said receiver comprises at least one port for directly or indirectly connecting at least one antenna, and a processing unit connected to the at least one port. In this context, the processing unit is configured to measure at least one noise parameter, especially over a certain frequency range, with respect to the at least one antenna. In addition to this, the processing unit is configured to correlate the correspondingly measured at least one noise parameter to at least one antenna load characteristic for detecting the at least one antenna and/or for determining the corresponding type of the at least one antenna. Advantageously, not only low cost but also low time expenditure can be ensured.

It is noted that it might be particularly advantageous if the processing unit is configured to measure the at least one noise parameter, especially over the certain frequency range, with respect to the at least one antenna when the at least one antenna is isolated.

It is further noted that the processing unit has not necessarily to be arranged within a housing of the receiver. For instance, the processing unit can be a processing device, especially a processing device being external to the housing of the receiver, such a personal computer, a laptop, a smartphone, a tablet, or the like.

With respect to the case of an indirect connection of the at least one antenna to the at least one port, it is noted that in this case, the at least one antenna may be connected via an element, preferably via an active or passive element, more preferably via a signal-modifying element, most preferably via a down-converter or an up-converter, to the at least one port.

According to an implementation form of the first aspect of the invention, the receiver further comprises a memory unit connected to the processing unit. In this context, the memory unit is configured to store the at least one antenna load characteristic. Advantageously, for instance, the memory unit can comprise a table comprising the at least one noise parameter, exemplarily noise figure, versus frequency.

In addition to or as an alternative of the usage of said memory unit, it is noted that it might be particularly advantageous if the processing unit comprises memory capabilities configured to store the at least one antenna load characteristic or the above-mentioned table, respectively.

According to a further implementation form of the first aspect of the invention, the at least one antenna load characteristic comprises or is at least one predefined antenna load characteristic, especially at least one antenna load characteristic predefined in the receiver. In addition to this or as an alternative, the at least one antenna load characteristic comprises or is at least one characteristic in the context of a matched load, especially a 50 Ohm matched load, and/or an open load and/or a short circuit. Advantageously, for example, the memory unit or the memory capabilities of the processing unit, respectively, can comprise a table of at least one respective antenna type versus the at least one antenna load characteristic.

According to a further implementation form of the first aspect of the invention, the at least one noise parameter comprises or is at least one noise pattern, especially at least one noise figure. Advantageously, for instance, complexity can be reduced, thereby further decreasing costs.

According to a further implementation form of the first aspect of the invention, the receiver further comprises an adjusting unit connected to the processing unit. In this context, the adjusting unit is configured to adjust a gain and/or a dynamic range of the receiver based on the correspondingly detected at least one antenna and/or the correspondingly determined type of the at least one antenna. Advantageously, for example, the adjusting unit can have access to a table or look-up table, especially comprising at least one respective antenna type versus the at least one antenna load characteristic, preferably stored by the memory unit or the memory capabilities of the processing unit, respectively, especially for adjusting and/or calibrating the receiver.

Further advantageously, especially in the context of adjusting the gain and/or the dynamic range of the receiver, the adjusting unit and/or the processing unit may be configured to perform post-processing, especially in the sense of receiver optimization, preferably based on the table or look-up table, respectively, or the corresponding antenna type chosen from said table or look-up table, respectively.

According to a further implementation form of the first aspect of the invention, especially for the case that the at least one antenna changes or is changed, the processing unit is configured to automatically update the correspondingly measured at least one noise parameter and/or the corresponding correlation of the correspondingly measured at least one noise parameter to the at least one antenna load characteristic. Advantageously, for instance, for the case that a user replaces the antenna in use by another antenna, the receiver allows for a corresponding optimization with respect to said another antenna, especially without additional inputs by the user, thereby increasing time savings.

According to a further implementation form of the first aspect of the invention, especially for the case that the at least one antenna changes or is changed, the processing unit is configured to receive and/or process at least one change signal for triggering an update of the correspondingly measured at least one noise parameter and/or of the corresponding correlation of the correspondingly measured at least one noise parameter to the at least one antenna load characteristic. Advantageously, for example, the change signal can be an interrupt signal, thereby allowing for an avoidance of a polling routine, which leads to an increased efficiency.

According to a further implementation form of the first aspect of the invention, the receiver further comprises a communication unit connected to the processing unit. In this context, the communication unit is configured to provide a data connection especially for controlling the receiver. Advantageously, for instance, a control signal can efficiently be transmitted to the processing unit via the communication unit for controlling the processing unit.

Further advantageously, the receiver or the processing unit, respectively, can be configured to be controlled by a control device such a personal computer, a laptop, a smartphone, a tablet, a cloud, especially in a direct manner or in an indirect manner via at least one interface, or any combination thereof.

According to a further implementation form of the first aspect of the invention, the data connection comprises or is a wired connection and/or a wireless connection, especially a control connection and/or an AUX connection and/or a LAN connection and/or a WLAN connection. Advantageously, for example, complexity can be reduced, thereby increasing cost-efficiency.

With respect to the above-mentioned AUX connection, it is noted that said AUX connection may especially be understood as an auxiliary connection. Said AUX connection or auxiliary connection, respectively, can especially be adapted to synchronize the receiver with at least one another device, preferably a network scanner and/or a signal generator and/or a Global Navigation Satellite System (GNSS) receiver, and/or to send commands, for instance, to the above-mentioned element, preferably to the above-mentioned active or passive element, more preferably to the above-mentioned signal-modifying element, most preferably to the above-mentioned down-converter or up-converter.

According to a further implementation form of the first aspect of the invention, the processing unit is configured to detect a change of the at least one noise parameter at a point of time especially where no trigger signal is apparent. Advantageously, for instance, said change can be a sudden change, thereby increasing reliability of receiver optimization.

According to a further implementation form of the first aspect of the invention, the processing unit is configured to measure the at least one noise parameter when the at least one antenna is not receiving power of at least one certain frequency or a certain frequency. Advantageously, for example, especially in the context of measuring the at least one noise parameter, the processing unit can be configured to exploit time gaps and/or frequency gaps with respect to any signal received by the at least one antenna.

For the sake of completeness, it is noted that, especially in the context of measuring the at least one noise parameter, the at least one antenna can be shielded, for instance with the aid of a Faraday cage or a metal cage, respectively. It might be particular advantageous if the processing unit is configured to make such a shielding effective. For example, the processing unit can be connected to an actuator for opening or closing such a Faraday cage or metal cage, respectively, correspondingly arranged regarding the at least one antenna.

According to a further implementation form of the first aspect of the invention, the processing unit is configured to interpret the at least one antenna not receiving power as exclusively receiving noise at the at least one certain frequency or at the certain frequency. Advantageously, for instance, at least one noise figure can efficiently and reliably be determined.

According to a second aspect of the invention, a system is provided. Said system comprising a receiver according to the first aspect of the invention or any of its implementation forms, respectively, and at least one antenna directly or indirectly connected to the receiver, especially to the at least one port of the receiver. Advantageously, not only low cost but also low time expenditure can be ensured.

With respect to the case of an indirect connection of the at least one antenna to the at least one port, it is noted that in this case, the at least one antenna may be connected via an element, preferably via an active or passive element, more preferably via a signal-modifying element, most preferably via a down-converter or an up-converter, to the at least one port.

According to an implementation form of the second aspect of the invention, the system further comprises a switch, and/or a control device. In this context, the switch is adapted to connect at least two antennas to the receiver, especially the at least one port of the receiver. In addition to this or as an alternative, the control device is configured to control the system, especially the receiver, preferably the processing unit of the receiver, and/or the switch.

According to a third aspect of the invention, a receiving method, especially using a receiver according to the first aspect of the invention or any of its implementation forms, respectively, is provided. Said receiving method comprises the steps of measuring at least one noise parameter, especially over a certain frequency range, with respect to at least one antenna, preferably directly or indirectly connected to at least one port of a receiver, especially with the aid of a processing unit of the receiver, and correlating the correspondingly measured at least one noise parameter to at least one antenna load characteristic for detecting the at least one antenna and/or for determining the corresponding type of the at least one antenna, especially with the aid of the processing unit of the receiver. Advantageously, not only low cost but also low time expenditure can be ensured.

With respect to the case of an indirect connection of the at least one antenna to the at least one port, it is noted that in this case, the at least one antenna may be connected via an element, preferably via an active or passive element, more preferably via a signal-modifying element, most preferably via a down-converter or an up-converter, to the at least one port.

Exemplary embodiments of the invention are now further explained with respect to the drawings by way of example only, and not for limitation. In the drawings:
- Fig. 1: shows a first exemplary embodiment of an inventive receiver;
- Fig. 2: shows a second exemplary embodiment of the receiver based on Fig. 1;
- Fig. 3: shows a third exemplary embodiment of the receiver based on Fig. 2;
- Fig. 4: shows a fourth exemplary embodiment of the receiver based on Fig. 3;
- Fig. 5: shows an exemplary embodiment of a system comprising the receiver of Fig. 4; and
- Fig. 6: shows a flow chart of an exemplary embodiment of the inventive receiving method.

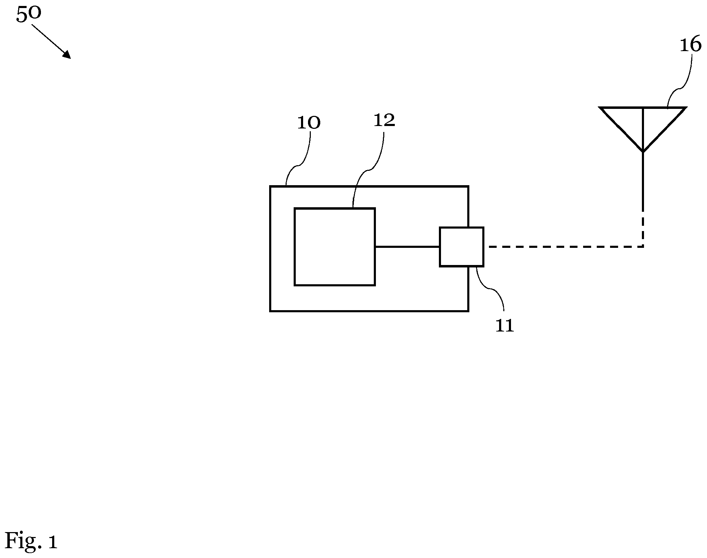

With respect to Fig. 1, a block diagram of a first exemplary embodiment of a receiver 10 is shown. Said receiver 10 comprises at least one port, exemplarily the port 11, for connecting at least one antenna, exemplarily the antenna 16, and a processing unit 12 connected to the at least one port or the port 11, respectively.

Said processing unit 12 is configured to measure at least one noise parameter, especially over a certain frequency range, with respect to the at least one antenna or the antenna 16, respectively.

Furthermore, the processing unit 12 is configured to correlate the correspondingly measured at least one noise parameter to at least one antenna load characteristic for detecting the at least one antenna or the antenna 16, respectively, and/or for determining the corresponding type of the at least one antenna or of the antenna 16, respectively.

For the sake of completeness, it is noted that Fig. 1 additionally shows a first exemplary embodiment of a system 50 comprising the receiver 10 and the antenna 16, especially for the case that the antenna 16 is connected to the receiver 10 or the port 11 thereof, respectively.

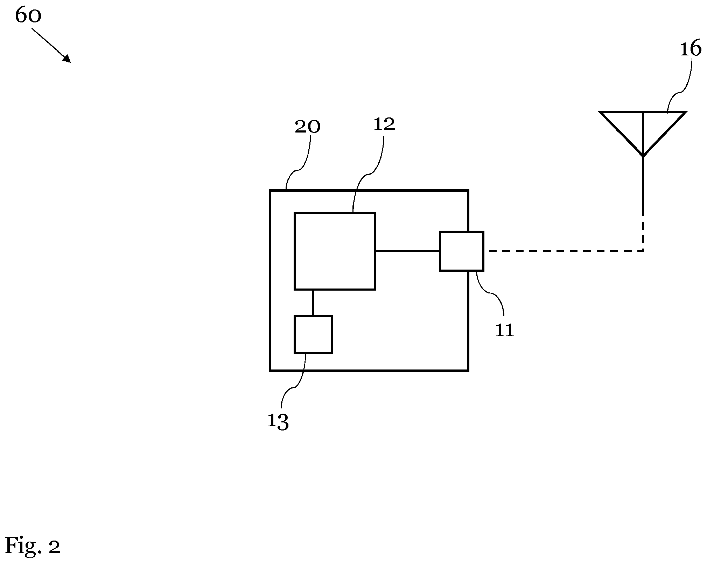

Moreover, Fig. 2 depicts a second exemplary embodiment of a receiver 20 based on the receiver 10 of Fig. 1. Said receiver 20 differs from the receiver 10 especially in that the receiver 20 further comprises a memory unit 13 connected to the processing unit 12. In this context, the memory unit 13 is configured to store the at least one antenna load characteristic, especially in the form of a look-up table comprising at least one antenna type versus the at least one antenna load characteristic.

It is noted that the processing unit 12 can especially comprise the memory unit 13 or corresponding memory capabilities, respectively.

By analogy with Fig. 1, it is further noted that Fig. 2 additionally depicts a second exemplary embodiment of a system 60 comprising the receiver 20 and the antenna 16, especially for the case that the antenna 16 is connected to the receiver 20 or the port 11 thereof, respectively.

With respect to the at least one antenna load characteristic, it might be particularly advantageous if the at least one antenna load characteristic comprises or is at least one predefined antenna load characteristic, especially at least one antenna load characteristic predefined in the receiver 10 or 20, which can analogously apply for each of the receivers 30 and 40 as described below.

In addition to this or as an alternative, the at least one antenna load characteristic can comprise or be at least one characteristic in the context of a matched load, especially a 50 Ohm matched load, and/or an open load and/or a short circuit.

With respect to the at least one noise parameter, it is noted that it might be particularly advantageous if the at least one noise parameter comprises or is at least one noise pattern, especially at least one noise figure.

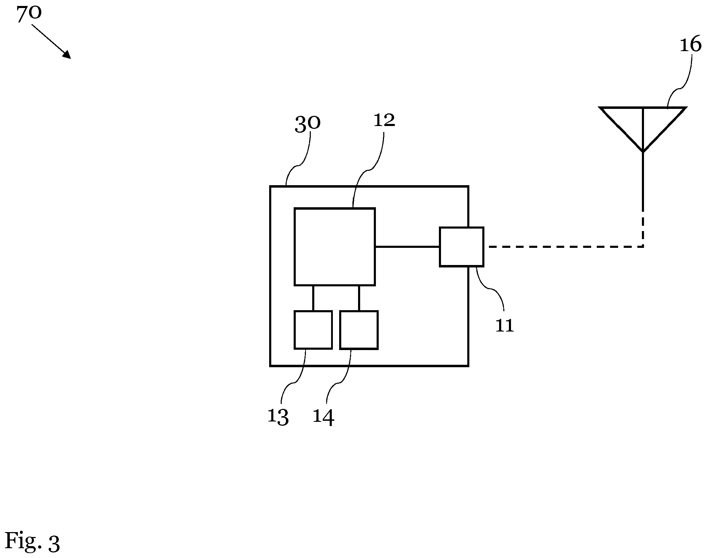

Fig. 3 illustrates a third exemplary embodiment of a receiver 30 based on the receiver 20 of Fig. 2. Said receiver 30 differs from the receiver 20 especially in that the receiver 30 further comprises an adjusting unit 14 connected to the processing unit 12. In this context, the adjusting unit 14 is configured to adjust a gain and/or a dynamic range of the receiver 30 based on the correspondingly detected at least one antenna or antenna 16, respectively, and/or the correspondingly determined type of the at least one antenna or of the antenna 16, respectively.

It is noted that the processing unit 12 can especially comprise the adjusting unit 14 or corresponding adjusting capabilities, respectively.

By analogy with Fig. 2, it is further noted that Fig. 3 additionally illustrates a third exemplary embodiment of a system 70 comprising the receiver 30 and the antenna 16, especially for the case that the antenna 16 is connected to the receiver 30 or the port 11 thereof, respectively.

It might be particularly advantageous if, especially for the case that the at least one antenna or the antenna 16, respectively, changes or is changed, the processing unit 12 is configured to automatically update the correspondingly measured at least one noise parameter and/or the corresponding correlation of the correspondingly measured at least one noise parameter to the at least one antenna load characteristic.

Furthermore, it might be particularly advantageous if, especially for the case that the at least one antenna or the antenna 16, respectively, changes or is changed, the processing unit 12 is configured to receive and/or process at least one change signal for triggering an update of the correspondingly measured at least one noise parameter and/or of the corresponding correlation of the correspondingly measured at least one noise parameter to the at least one antenna load characteristic.

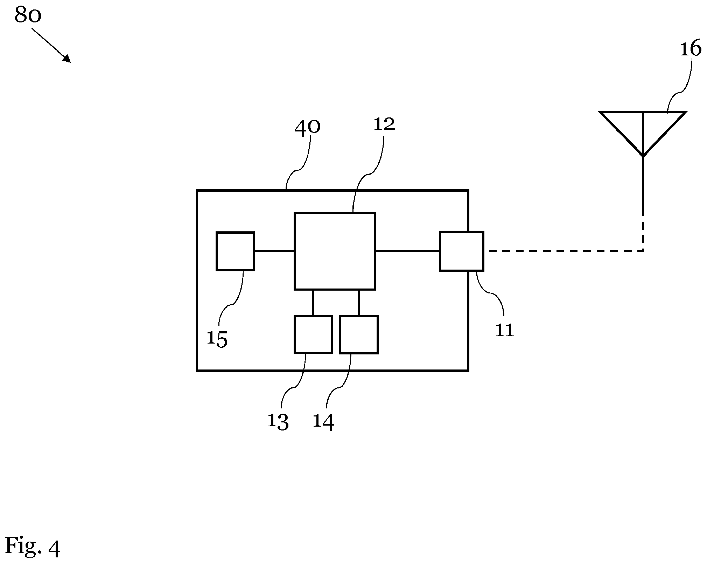

Moreover, Fig. 4 shows a fourth exemplary embodiment of a receiver 40 based on the receiver 30 of Fig. 3. Said receiver 40 differs from the receiver 30 especially in that the receiver 40 further comprises a communication unit 15 connected to the processing unit 12. In this context, the communication unit 15 is configured to provide a data connection especially for controlling the receiver 40 or the processing unit 12 thereof, respectively.

It is noted that the processing unit 12 can especially comprise the communication unit 15 or corresponding communication capabilities, respectively.

By analogy with Fig. 3, it is further noted that Fig. 4 additionally illustrates a fourth exemplary embodiment of a system 80 comprising the receiver 40 and the antenna 16, especially for the case that the antenna 16 is connected to the receiver 40 or the port 11 thereof, respectively.

With respect to the above-mentioned data connection, it is noted that it might be particularly advantageous if the data connection comprises or is a wired connection and/or a wireless connection, especially a control connection and/or an AUX connection and/or a LAN connection and/or a WLAN connection.

With respect to the processing unit 12, it is noted that it might be particularly advantageous if the processing unit 12 is configured to detect a or any change of the at least one noise parameter at a or any point of time especially where no trigger signal is apparent.

It is further noted that it might be particularly advantageous if the processing unit 12 is configured to measure the at least one noise parameter when the at least one antenna or the antenna 16, respectively, is not receiving power and/or any external signal of at least one certain frequency or a certain frequency.

In this context, the processing unit 12 may especially be configured to interpret the at least one antenna or the antenna 16, respectively, not receiving power and/or any external signal as exclusively receiving noise at the at least one certain frequency or at the certain frequency.

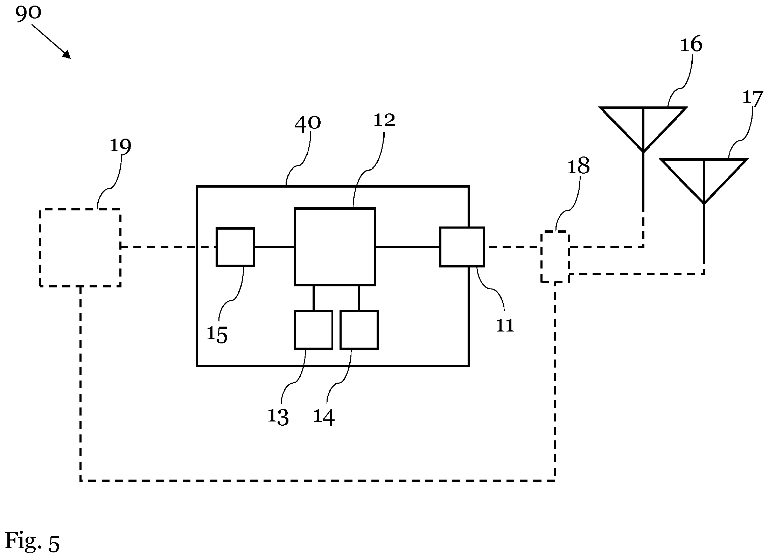

Now, with respect to Fig. 5, a fifth exemplary embodiment of a system 90 comprising the receiver 40 and being based on the system 80 of Fig. 4 is depicted.

In addition to the antenna 16, the system 90 can comprise at least one further antenna, exemplarily the further antenna 17. Said at least one further antenna or said further antenna 17 could be connected to at least one further port or a further port of the receiver 40.

In this exemplary case, the system 90 can comprise a switch 18 for connecting the at least one antenna, exemplarily the antenna 16, and the at least one further antenna, exemplarily the further antenna 17, to the at least one port, exemplarily the port 11, of the receiver 40.

As it can further be seen from Fig. 5, in addition to or as an alternative of the switch 18, the system 90 can comprise a control device 19 configured to control the system 90, especially the receiver 40, preferably the processing unit 12 of the receiver 40, and/or the switch 18.

With respect to said control device 19, it is noted that the control device 19 can be a personal computer, a laptop, a smartphone, a tablet, a cloud, especially providing a corresponding control signal in a direct manner or in an indirect manner via at least one interface, or any combination thereof.

It is further noted that, especially as exemplarily illustrated by Fig. 5, the control device 19 may provide a first control signal for the processing unit 12 via the communication unit 15 of the receiver 40. Furthermore, the control device 19 may provide a second control signal for the switch 18.

It might be particularly advantageous if the first control signal is provided in the context of a bidirectional communication. Accordingly, the processing unit 12 may be configured to provide a first feedback signal for the control device 19 via the communication unit 15, especially as a response to the first control signal.

By analogy therewith, it might be particularly advantageous if the second control signal is provided in the context of a bidirectional communication. Accordingly, the switch 18 may be configured to provide a second feedback signal for the control device 19, especially as a response to the second control signal.

Moreover, with respect to the receiver 40, it is noted that it might be particularly advantageous if the receiver 40 is a receiver for or of a spectrum analyzer or a receiver for or of a radio frequency scanner. This can analogously apply for each of the receivers 10, 20, and 30.

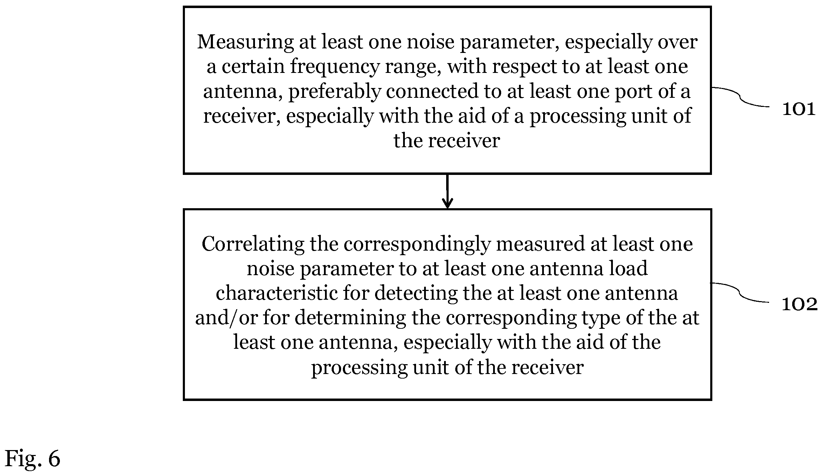

Finally, Fig. 6 shows a flow chart of an exemplary embodiment of the receiving method, especially using a receiver as described above, exemplarily one of the receivers 10, 20, 30, 40. A first step 101 comprises measuring at least one noise parameter, especially over a certain frequency range, with respect to at least one antenna, such as at least one of the above-mentioned antennas 16, 17, preferably connected to at least one port of a receiver, such as the above-mentioned port 11, especially with the aid of a processing unit of the receiver such as the above-mentioned processing unit 12. Furthermore, a second step 102 comprises correlating the correspondingly measured at least one noise parameter to at least one antenna load characteristic for detecting the at least one antenna and/or for determining the corresponding type of the at least one antenna, especially with the aid of the processing unit of the receiver.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A receiver (10, 20, 30, 40) comprising:
at least one port (11) for directly or indirectly connecting at least one antenna (16, 17), and
a processing unit (12) connected to the at least one port (11),
wherein the processing unit (12) is configured to measure at least one noise parameter, especially over a certain frequency range, with respect to the at least one antenna (16, 17), and
wherein the processing unit (12) is configured to correlate the correspondingly measured at least one noise parameter to at least one antenna load characteristic for detecting the at least one antenna (16, 17) and/or for determining the corresponding type of the at least one antenna (16, 17) .

2. The receiver (10, 20, 30, 40) according to claim 1, further comprising:
a memory unit (13) connected to the processing unit (12),
wherein the memory unit (13) is configured to store the at least one antenna load characteristic.

3. The receiver (10, 20, 30, 40) according to claim 1 or 2, wherein the at least one antenna load characteristic comprises or is at least one predefined antenna load characteristic, especially at least one antenna load characteristic predefined in the receiver (10, 20, 30, 40), and/or
wherein the at least one antenna load characteristic comprises or is at least one characteristic in the context of a matched load, especially a 50 Ohm matched load, and/or an open load and/or a short circuit.

4. The receiver (10, 20, 30, 40) according to any of the claims 1 to 3,
wherein the at least one noise parameter comprises or is at least one noise pattern, especially at least one noise figure.

5. The receiver (10, 20, 30, 40) according to any of the claims 1 to 4, further comprising:
an adjusting unit (14) connected to the processing unit (12),
wherein the adjusting unit (14) is configured to adjust a gain and/or a dynamic range of the receiver based on the correspondingly detected at least one antenna (16, 17) and/or the correspondingly determined type of the at least one antenna (16, 17).

6. The receiver (10, 20, 30, 40) according to any of the claims 1 to 5,
wherein, especially for the case that the at least one antenna (16, 17) changes or is changed, the processing unit (12) is configured to automatically update the correspondingly measured at least one noise parameter and/or the corresponding correlation of the correspondingly measured at least one noise parameter to the at least one antenna load characteristic.

7. The receiver (10, 20, 30, 40) according to any of the claims 1 to 6,
wherein, especially for the case that the at least one antenna (16, 17) changes or is changed, the processing unit (12) is configured to receive and/or process at least one change signal for triggering an update of the correspondingly measured at least one noise parameter and/or of the corresponding correlation of the correspondingly measured at least one noise parameter to the at least one antenna load characteristic.

8. The receiver (10, 20, 30, 40) according to any of the claims 1 to 7, further comprising:
a communication unit (15) connected to the processing unit (12),
wherein the communication unit (15) is configured to provide a data connection especially for controlling the receiver (10, 20, 30, 40).

9. The receiver (10, 20, 30, 40) according to claim 8, wherein the data connection comprises or is a wired connection and/or a wireless connection, especially a control connection and/or an AUX connection and/or a LAN connection and/or a WLAN connection.

10. The receiver (10, 20, 30, 40) according to any of the claims 1 to 9,
wherein the processing unit (12) is configured to detect a change of the at least one noise parameter at a point of time especially where no trigger signal is apparent.

11. The receiver (10, 20, 30, 40) according to any of the claims 1 to 10,
wherein the processing unit (12) is configured to measure the at least one noise parameter when the at least one antenna (16, 17) is not receiving power of at least one certain frequency or a certain frequency.

12. The receiver (10, 20, 30, 40) according to claim 11, wherein the processing unit (12) is configured to interpret the at least one antenna (16, 17) not receiving power as exclusively receiving noise at the at least one certain frequency or at the certain frequency.

13. A system (50, 60, 70, 80, 90) comprising:
a receiver (10, 20, 30, 40) according to any of the claims 1 to 12, and
at least one antenna (16, 17) directly or indirectly connected to the receiver (10, 20, 30, 40), especially to the at least one port (11) of the receiver (10, 20, 30, 40) .

14. The system (50, 60, 70, 80, 90) according to claim 13, further comprising:
a switch (18), and/or
a control device (19),
wherein the switch (18) is adapted to connect at least two antennas (16, 17) to the receiver (10, 20, 30, 40), especially the at least one port (11) of the receiver (10, 20, 30, 40), and/or
wherein the control device (19) is configured to control the system (50, 60, 70, 80, 90), especially the receiver (10, 20, 30, 40), preferably the processing unit (12) of the receiver (10, 20, 30, 40), and/or the switch (18).

15. A receiving method, especially using a receiver (10, 20, 30, 40) according to any of the claims 1 to 12, comprising the steps of:
measuring (101) at least one noise parameter, especially over a certain frequency range, with respect to at least one antenna (16, 17), preferably directly or indirectly connected to at least one port (11) of a receiver (10, 20, 30, 40), especially with the aid of a processing unit (12) of the receiver (10, 20, 30, 40), and
correlating (102) the correspondingly measured at least one noise parameter to at least one antenna load characteristic for detecting the at least one antenna (16, 17) and/or for determining the corresponding type of the at least one antenna (16, 17), especially with the aid of the processing unit (12) of the receiver (10, 20, 30, 40).
